# NEW EUROPEAN PATENT SPECIFICATION

(11) **EP 2 475 691 B2**
(45) Date of publication and mention of the opposition decision: **12.02.2020**
(45) Mention of the grant of the patent: 17.08.2016
(21) Application number: 10755258.0
(22) Date of filing: 08.09.2010
(51) Int. Cl.: C08F 10/00, C08F 2/00, C08F 2/14, C08F 4/24

(54) **OLEFIN POLYMERISATION PROCESS**
OLEFIN-POLYMERISATIONSVERFAHREN
PROCÉDÉ DE POLYMÉRISATION D'OLÉFINES

(30) Priority: 11.09.2009 US 584755
(43) Date of publication of application: 18.07.2012
(73) Proprietor: Ineos Usa Llc, Lisle, IL 60532 (US)
(72) Inventor: GROSJEAN, Abel, Shoreacres TX 77571 (US); STEINER, William, Houston Texas 77003 (US); KILLOUGH, James M., Houston Texas 77079 (US); SHERRILL, Shirley W., US (US)
(74) Representative: Smith, Julian Philip Howard
(86) International application number: PCT/US2010/002448
(87) International publication number: WO 2011/031309

(56) References cited:
- EP-A1- 1 564 229
- EP-A2- 0 589 350
- WO-A1-00/02931
- WO-A1-01/90204
- WO-A1-2005/028098
- WO-A1-2005/058978
- WO-A1-2005/068550
- WO-A1-2007/088000
- WO-A1-2007/131646
- WO-A1-2008/074467
- WO-A1-2011/072850
- US-A- 3 956 252
- US-A- 4 182 810
- US-A1- 2006 045 823

## Description

The present invention is concerned with olefin polymerisation in slurry phase reactors, and in particular with the particle size of the polymer produced in the process.

Slurry phase polymerisation of olefins is well known wherein an olefin monomer and optionally olefin comonomer are polymerised in the presence of a catalyst in a diluent in which the solid polymer product is suspended and transported. Such processes can be conducted for example by introducing the monomer and optionally comonomer into a stirred tank or continuous loop reactor comprising polyolefin and a catalyst for the polymerisation.

Typically, in the slurry polymerisation process of polyethylene, the slurry in the reactor will comprise the particulate polymer, the hydrocarbon diluent(s), (co) monomer(s), catalyst, chain terminators such as hydrogen and other reactor additives.

Polymerisation is typically carried out at temperatures in the range 50-125°C and at pressures in the range 1-100 bara. The catalyst used can be any catalyst typically used for olefin polymerisation such as chromium oxide, Ziegler-Natta or metallocene-type catalysts. The product slurry comprising polymer and diluent, and in most cases catalyst, olefin monomer and comonomer can be discharged intermittently or continuously, optionally using concentrating devices such as hydrocyclones or settling legs to minimise the quantity of fluids withdrawn with the polymer. Released heat of polymerisation is lost from the reactor through the reactor walls, usually with the aid of a cooling jacket surrounding the reactor.

It is well known that in industrial-scale polymerisation, if the polymer particles are insoluble or substantially insoluble in the diluent they can stick together to form agglomerates, or may become deposited on the walls of the polymerisation reactor. This so-called fouling leads to a decrease in the efficiency of heat exchange between the reactor bulk and the coolant surrounding the reactor, as well as possible loss of reactor control due to overheating, or to reactor or downstream polymer processing equipment failure due to plugging by agglomerates. Such fouling is caused in part by very small polymer particles (fines) and also by the build-up of electrostatic charge on the walls of the reactor. Attempts to avoid fouling during slurry polymerisation usually involve the addition of an antifouling agent to the polymerisation medium. WO 00/02931 discloses a catalyst composition comprising a supported polymerization catalyst and a carboxylate metal salt as antistatic agent.

Typically, the antifouling agent acts for example to make the medium more conductive, thus preventing to some extent the formation of electrostatic charge, which is one cause of the build-up of polymer on the wall of the reactor.

US 4182810 discloses the use of an antistatic agent such as Stadis® 450 to reduce fouling in a polymerisation reactor.

Partly due to the problems with fouling, the properties of the polymer powder exiting the reactor are very important. Polymer powders having a high lines content can cause problems such as accumulation of fines in the recycling units, and during the transfer and packing of the powder and sampling; there is also a risk of accumulation of static electricity in the conveyors and the storage tanks. Furthermore, during subsequent processing there may be separation of fine and coarse particles in the polymer, leading to process variation (such as feeding or melting differences between coarse and fine particles in the extruder). Fine particles also reduce powder transfer rates, thereby slowing the process, as well as posing an environmental or explosion hazard. Thus a homogeneous particle size would have many advantages.

### BRIEF DESCRIPTION OF THE DRAWINGS

The accompanying drawings, which are incorporated in and constitute a part of this specification, illustrate embodiments of the invention and, together with the description, serve to explain the features, advantages, and principles of the invention. In the drawings; FIG. 1 is a graph that shows the volume percent of fine particles in a polyolefin polymerisation process where no anti-static agent is used. FIG. 2 is a graph that shows the volume percent of fine particles in a polyolefin polymerisation process acceding to the invention where an anti-static agent is used. FIG. 3 is a graph showing the level of fine particles during a polymerization process according to the invention with a constant level of anti-static agent. FIG. 4 is a graph showing the level of fine particles during a polymerization process according to the invention after the removal of anti-static agent.

We have found that it is possible to obtain polymer having a significantly reduced proportion of fines by the addition of an anti-static agent to the polymerisation process.

Accordingly in a first aspect the present invention provides a process for producing an olefin polymer in a slurry polymerisation process operating at a temperature of 90°C to 107°C and utilising a chromium catalyst having an activity of at least 1,000 g polymer / g catalyst/hour on a support having a pore volume of at least 1.3 cm³/g and a productivity under typical reactor operation of between 3000 and 15000 g of polymer per g of catalyst, comprising adding to the polymerisation mixture from 0.1 to 100ppm by weight of an anti-static agent which is a dialkyl dimethyl ammonium chloride, wherein the resulting polymer has a particle size distribution such that less than 8vol%, preferably less than 5vol% of the polymer particles have an average diameter of 125 µm less.

A further aspect of the invention comprises the use of 0.1 to 100ppm by weight of an anti-static agent which is a dialkyl dimethyl ammonium chloride in a slurry polymerisation process operating at a temperature of 90°C to 107°C and utilising a chromium catalyst having an activity of at least 1,000 g polymer / g catalyst/hour on a support having a pore volume of at least 1.3 cm³/g and a productivity under typical reactor operation of between 3000 and 15000 g of polymer per g of catalyst, to control the particle size distribution of polymer produced in said process such that less than 8vol%, preferably less than 5vol% of the polymer particles have an average diameter of 125 µm less.

Amongst dialkyl dimethyl ammonium chlorides, the alkyl chains preferably range from C8 to C22 and can be saturated or unsaturated. An example is dicocoyl dimethyl ammonium chloride.

The anti-static agent is typically known to reduce the catalyst activity. This would suggest a lower average powder particle size as the quantity of polymer produced per weight of catalyst would be reduced. We have observed that the addition of anti-static agent does not decrease the average particles size of the flake. The anti-static agent appears to promote a more stable growth of the powder particles or appears to reduce the fragmentation of the particles.

The amount of anti-static agent added is to provide a concentration in the reaction mixture which is preferably between 0.2 and 50ppm wt, more preferably between 0.2 and 30ppm wt, and most preferably between 0.4 and 10ppm wt.

Preferably the quantity of particles having an average diameter of 125mm or less is reduced by at least 30vol%, more preferably at least 50vol%, compared with the level in an identical process in which no anti-static agent has been added.

The powder particles size can be measured by sieving analysis (like ASTM D-1921 for particles size measurement of Plastic Materials, Method A) or alternatively by laser light diffraction. During this measurement, the particles are passed through a laser beam. The technique uses the angular intensity of the scattered light to determine the particle size distribution of the powder.

The polymer powder produced by the invention may be any polyolefin, although the invention is particularly suitable for polyethylene. The polyethylene may be a monomodal or a multimodal polyethylene such as a bimodal polyethylene. In the latter case, it is preferably made by a process which comprises the steps of introducing ethylene, a polymerisation catalyst and optionally an alpha-olefin containing from 3 to 12 carbon atoms into a first reactor, polymerising the ethylene in said first reactor to form a first polymer, then transferring a mixture comprising said polymer and the catalyst where further polymerisation takes place, optionally in the presence of a further alpha-olefin containing from 3 to 12 carbon atoms, to form a second ethylene polymer, wherein the weight ratio of the two polymers is (30 to 70):(70 to 30). In one embodiment the first polymer is a low molecular weight polymer and the second polymer is a high molecular weight polymer (as determined by GPC). In an alternative embodiment, the first polymer is a high molecular weight polymer and the second polymer is a low molecular weight polymer.

In the most preferred embodiment, a monomodal polyethylene is produced. This may optionally be made in a multi-reactor process, for example a cascade or two-reactor process. The cascade reactors may be operated such that essentially the same polymer is produced in each reactor, or such that essentially the same reaction conditions are used in each reactor. Alternatively they may be operated such that different reaction conditions are used and/or polymer properties produced in each reactor. By "monomodal" is meant that the polymer does not have two or more distinct peaks in its molecular weight distribution as determined by GPC.

Any olefin polymerisation catalyst based on chrome may be used in the process of the invention. In the catalytic solid comprising a chromium catalyst, the chromium is generally present in a proportion ranging from 0.05 to 10% by weight, preferably from 0.1 to 5% by weight, more particularly from 0.25 to 2% by weight of chromium based on the total weight of the catalytic solid.

With the preferred high-activity catalysts of the invention, activity may be satisfactory without any cocatalyst addition, and therefore cocatalyst addition is not essential. However if a co-catalyst is used, the most preferred for use with a chromium : catalyst are organometallic compounds of aluminium or of boron. The best results are obtained with organoboron compounds since they make it possible to increase the catalytic activity. Organoboron compounds which may be used include trialkylborons in which the alkyl chains comprise up to 20 carbon atoms. In general, those are preferred in which the alkyl chains are straight and comprise up to 18 carbon atoms, more particularly from 2 to 8 carbon atoms. Triethylboron is preferred.

The support used with a chromium catalyst preferably has a specific surface area of at least 100m²/g, in particular at least 180m²/g, with values of at least 220m²/g being most preferred. The specific surface area generally does not exceed 800m²/g, and typically is no higher than 650m²/g. The specific surface area (SS) of the support is measured according to the BET volumetric method of British Standard BS 4359/1 (1984). The support preferably has a pore volume of at least 1.3 cm³/g, and more preferably at least 1.6 cm³/g. The pore volume is generally no more than 4 cm³/g, in particular no more than 3 cm³/g. Pore volume (PV) is defined as the sum of the pore volumes of pores having a radius less than or equal to 75Å, measured by the nitrogen penetration method (BET) according to the volumetric technique described in British standard BS 4359/1 (1984), and of the pore volume measured by the mercury penetration method using a Poro 2000 type porosimeter marketed by Carlo Erba Co, according to Belgian standard NBN B 05-202 (1976). Good results may be obtained when the specific surface (SS) and the pore volume (PV) of the support correspond to the following relationship: SS < (564PV358), in which SS and PV are, respectively, the numerical values of the specific surface expressed in m²/g and of the pore volume expressed in cm³/g.

Preferably the support is in the form of a powder comprising particles of from 20 to 200 µm in diameter.

Particularly preferred chromium catalysts include chrome catalysts on a pure silica support, usually having a pore volume of at least 1.3 cm³/g and a particle size ranging from 30 to 70 microns. Examples of such catalysts are ES370X from Ineos Silica / PQ Corporation and HA30B from WR Grace. Other preferred catalysts include high porosity catalysts on silica/titania cogel and tergel supports such as the 963 catalyst from WR Grace. The preferred catalysts have a relatively high activity compared with earlier catalysts, due to the presence of a high pore volume and fine microstructure.

A preferred type of reactor utilised for such polymerisations is a loop reactor, which is a continuous tubular construction comprising at least two, for example four, vertical sections and at least two, for example four horizontal sections. The heat of polymerisation is typically removed using indirect exchange with a cooling medium, preferably water, in jackets surrounding at least part of the tubular loop reactor. The volume of a reactor can vary but is typically in the range 10-200m³.

In a preferred mode of operation, the pressure employed in such a loop reactor is sufficient to maintain the reaction system 'liquid full' i.e. the diluent and reagents (i.e. monomers and chain terminators) are substantially in a liquid phase with no gas space above. Normally pressures used are between 1-100 bara, preferably between 30 to 50 bara. In ethylene polymerisation the ethylene partial pressure is most often chosen from 0.1 to 5 MPa, preferably from 0.2 to 2 MPa, more particularly from 0.4 to 1.5 MPa. The temperatures selected are such that substantially all of the polymer produced is essentially (i) in non-tacky and non-agglomerative solid particle and (ii) insoluble in the diluent. The polymerisation temperature depends on the hydrocarbon diluent chosen and the polymer being produced. In ethylene polymerisation it is generally below 130°C, typically between 50 and 125°C, preferably between 75 and 115°C. For example in ethylene polymerisation in isobutane diluent, the pressure employed in the loop is preferably in the range 30-50 bara, the ethylene partial pressure is preferably in the range 0.2-2MPa and the polymerisation temperature is in the range 75-115°C.

Hydrogen may be added to the polymerisation reactor at level of up to 5mol% in the diluent. Hydrogen acts as a chain termination agent for the polymerisation and as such can reduce the average polymer chain length. Levels below 2mol% are typically preferred when the polymerisation is carried with chromium catalysts.

Catalysts with high polymerisation activity are advantageous as the corresponding polymer will have typically lower residues and will require lower catalyst usage. Under typical reactor operation, the catalyst productivity is in the range of 3000 and 15000 g of polymer per g of catalyst. The polymerisation residence time is typically between 40 minutes and 3 hours.

The solids content of the reaction mixture in the reactor is typically between 30 and 60wt%, and more usually between 35 and 50wt%.

The anti-static agent can be introduced directly into the reactor or diluted before introduction. For example, a diluted anti-static solution can be prepared by mixing the anti-static agent with a solvent such as isobutane or hexane or other hydrocarbons. This solution is usually stored in a vessel and is then introduced by a pump into the reactor. A metering system can be used to measure the flow during operation. In one embodiment, a single reactor is used and the anti-static agent is then introduced into this reactor, either separately or together with either the diluent or one of the reactants. It is preferably added continuously, although may be added batch-wise.

For the manufacture of monomodal polymers, one reactor or two or more reactors in series can be used. The single or first reactor of the series is supplied with catalyst or prepolymer and optionally the cocatalyst in addition to the diluent and monomer, and each subsequent reactor is supplied with, at least, monomer, in particular ethylene and with the slurry arising from a preceding reactor of the series, this mixture comprising the catalyst and a mixture of the polymers produced in a preceding reactor of the series.

For the manufacture of multimodal polymers, two or more reactors in series are generally used. A first reactor of the series is supplied with catalyst or prepolymer and optionally the cocatalyst in addition to the diluent and monomer, and each subsequent reactor is supplied with, at least, monomer, in particular ethylene and with the slurry arising from a preceding reactor of the series, this mixture comprising the catalyst and a mixture of the polymers produced in a preceding reactor of the series. It is optionally possible to supply a second reactor and/or, if appropriate, at least one of the following reactors with fresh catalyst and/or cocatalyst. However, it is preferable to introduce the catalyst and the cocatalyst exclusively into a first reactor.

The anti-static agent is preferably introduced into each reactor, but may be introduced only into the first reactor, as a certain amount of anti-static agent will be transferred with the product and diluent to the second reactor.

### EXAMPLES

### EXAMPLE 1

The reactor in this Example was a polyethylene slurry loop reactor producing approximately 4100 kg/hr of polyethylene with an approximate residence time of 3 hours. The reaction feeds were ethylene, hexene, isobutane diluent, and an ES370X chrome catalyst available from Ineos Silica/PQ Corporation. The ES370X catalyst has a water pore volume of 1.3 cm³/g minimum and a surface area of 300 m²/g measured by BET, and has an Average Particle Size (d50) measured by Malvern close to 50µm. The catalyst was prepared prior to introduction to the reactor by drying and oxidation at 760°C for eight hours under air.

A stream containing the polyethylene together with isobutane, unreacted ethylene and unreacted hexene was continuously withdrawn from the reactor. The reactor operated at a temperature of 101°C, a pressure of 490 to 510 psig, and an ethylene concentration of about 4mol%. The catalyst productivity was between 3000 and 12500 g of polymer per g of catalyst, and the solids concentration was maintained between 35 and 46wt%.

The target product properties were an MI_{21.6} of 5 g/10min and density of 954.5 kg/m³. The particle size distribution was measured using laser light scattering with a Malvern Mastersizer particle size analyzer with a 4-2000 µm lens. Figure 1 shows the trend of the volume percent of particles of 125 µm and smaller, normally referred to as fines. No anti-static agent was used, and Figure 1 shows that the quantity of fines remained essentially constant for the duration of the polymerisation. This amount of fines would have been of an unacceptable quantity for customers. Figure 1 also shows the quantity of particles having a size between 125 and 250 µm (indicated as "<250"). The average particle size during this production is reported as D(50) and was close to 400 µm.

### EXAMPLE 2

Figure 2 shows a further polymerisation reaction conducted in the same reactor under essentially the same conditions. The same ES370X chrome catalyst as in Example 1 was used.

The majority of the polymerisation was conducted without the use of an anti-static agent. Near the end of the run (at the point indicated in Figure 2), anti-static agent was added into the reactor. The anti-static agent was a dialkyl dimethyl ammonium chloride available from Akzo under the trade name Arquad® 2C-75. The reactor conditions were controlled during the run in an attempt to control the quantity of fines being produced. The temperature was reduced from 98°C down to 96°C, the ethylene concentration was stepped from 5mol% to 7mol% and the pressure was stepped from 490 psig to 510 psig. This changes occurred over a period of more than 36 hours and did not significantly reduce the level of fines produced.

From the point the anti-static agent solution was added at 1 gallon/h (3.79 litres/h), the reactor conditions were maintained constant at 96°C, 510 psig and 7mol% ethylene for the entire duration of the anti-static addition. The relative concentration of anti-static agent in the reactor was close to 20ppm by weight of the isobutane diluent. The catalyst productivity during examples 1&2 were between 3,000 and 12,500 g of polymer per g of catalyst. The solids concentration was maintained between 35 and 46% by weight.

Figure 2 shows the significant effects within a couple of residence times of the reactor, with a significant reduction in the quantity of small particles. The average particle size after the anti-static addition was close to 1000 µm.

### EXAMPLE 3

In this Example approximately 11000 kg/hr of polyethylene was produced in a liquid full slurry loop process operated at a temperature of 99°C, a pressure of 490 to 510 psig, an ethylene concentration of about 7 mol%, hydrogen concentration below 0.1mol% and having an approximate total residence time of 2 hours. The reaction feeds were ethylene, hexene, isobutane diluent, hydrogen and an EP311 chrome catalyst available from INEOS Silica / PQ Corporation. The EP311 catalyst has a water pore volume of 1.45 cc/g minimum and a surface area of 345 to 435 m²/g measured by BET. The catalyst was prepared prior to introduction to the reactor by drying and oxidation at 760°C for eight hours under air. This catalyst has an average particle size (d50) measured by Malvern of 90 to 130 µm. The target product properties were an MI_{21.6} of 13.5 g/10min and density of 950.5 kg/m³.

The reaction was supplied with a feed of antistatic agent over a period of more than 24 hours. The anti-static agent was a dialkyl dimethyl ammonium chloride available from Akzo under the trade name Arquad® 2C-75. The anti-static agent was introduced as a solution in isobutane. The final concentration of anti-static agent in the reaction was approximately 5 ppm wt in the isobutane diluent. The polymer produced under these conditions was tested for particle size distribution using a Malvern Mastersizer particle size analyzer with a 4-2000 µm lens, and the proportion of particles smaller than 125 µm was measured. The level of particles smaller than 125 µm averaged about 2 vol% during this portion of the reaction. Figure 3 shows the measurement of polymer particle size during this polymerisation. The level of fines below 125 µm is stable and at a low level.

### EXAMPLE 4

This Example describes a continuation of the polymerisation reaction described in Example 3. The polymerisation was continued but the addition of anti-static agent was stopped 34 hours after the start of the reaction. As a consequence, the concentration of anti-static agent in the reaction slurry reduced over time as the slurry was diluted with fresh reactants and further isobutane. After several hours, the concentration of anti-static agent in the reaction zone was low and its effect no longer observed. The reactor conditions were controlled during this part of the reaction so as to produce polyethylene having the same melt index and density. The reactor conditions and the polymer produced were monitored for more than 24 hours following cessation of the anti-static addition. The temperature was 98°C, the ethylene concentration was 7 mol% and the pressure was 490 to 510 psig. The hydrogen concentration was below 0.1mol% The catalyst productivity was between 3500 and 7000 g of polymer per g of catalyst.

The level of small particles (fines) started at a low value from the initial conditions during addition of the anti-static agent and increased over time. The proportion of particles smaller than 125 µm was measured as 6.4, 13.2 and 11.7 vol% at about 26, 30 and 34 hours respectively after cessation of the anti-static feed.

The level of fines during the period of the reaction is shown in Figure 4, from which it can be seen that this level ultimately increases significantly following cessation of the anti-static addition.

## Claims

1. Process for producing an olefin polymer in a slurry polymerisation process operating at a temperature of 90°C to 107°C and utilising a chromium catalyst having an activity of at least 1,000 g polymer / g catalyst/hour on a support having a pore volume of at least 1.3 cm³/g and a productivity under typical reactor operation of between 3000 and 15000 g of polymer per g of catalyst, comprising adding to the polymerisation mixture an anti-static agent which is a dialkyl dimethyl ammonium chloride, in an amount of from 0.1 to 100ppm by weight based on the diluent in the slurry, wherein the resulting polymer has a particle size distribution such that less than 8vol%, preferably less than 5vol% of the polymer particles have an average diameter of 125µm or less.

2. Process according to claim 1, wherein from 0.2 to 30ppm weight, preferably from 0.4 to 10ppm weight of the anti-static agent is added to the polymerisation mixture.

3. Process according to claim 2, wherein the alkyl chains of the dialkyl dimethyl ammonium chloride are both between C8 to C22.

4. Process according to claim 3, wherein the dialkyl dimethyl ammonium chloride is dicocoyl dimethyl ammonium chloride.

5. Process according to any preceding claim, wherein the chromium catalyst support has a pore volume of at least 1.6 cm³/g.

6. Process according to any preceding claim, wherein the chromium catalyst support has a specific surface area no higher than 800m²/g, and preferably no higher than 650m²/g.

7. Process according to any preceding claim, wherein the chromium catalyst support is in the form of a powder comprising particles of from 20 to 200 µm in diameter.

8. Use of 0.1 to 100ppm by weight of an anti-static agent, which is a dialkyl dimethyl ammonium chloride, in a slurry polymerisation process operating at a temperature of 90°C to 107°C and utilising a chromium catalyst having an activity of at least 1,000 g polymer / g catalyst/hour on a support having a pore volume of at least 1.3 cm³/g and a productivity under typical reactor operation of between 3000 and 15000 g of polymer per g of catalyst, to control the particle size distribution of polymer produced in said process such that less than 8vol%, preferably less than 5vol% of the polymer particles have an average diameter of 125µm or less.

9. Process or use according to any preceding claim, wherein the quantity of particles having an average diameter of 125µm or less is reduced by at least 30vol%, preferably at least 50vol%, compared with the level in an identical process in which no anti-static agent has been added.

## Patentansprüche

1. Verfahren zur Herstellung eines Olefin-Polymers in einem Suspensionspolymerisationsverfahren, das bei einer Temperatur von 90 °C bis 107 °C und unter Verwendung eines Chromkatalysators mit einer Aktivität von mindestens 1.000 g Polymer / g Katalysator/Stunde auf einem Träger mit einem Porenvolumen von mindestens 1,3 cm³/g und einer Produktivität unter typischem Reaktorbetrieb zwischen 3.000 und 15.000 g Polymer pro g Katalysator durchgeführt wird, umfassend: Zugeben eines antistatischen Mittels, bei dem es sich um ein Dialkyldimethylammoniumchlorid handelt, in einer Menge von 0,1 bis 100 Gew.-ppm, bezogen auf das Verdünnungsmittel in der Suspension, zu dem Polymerisationsgemisch, wobei das daraus resultierende Polymer eine derartige Partikelgrößenverteilung aufweist, dass weniger als 8 Vol.-%, vorzugsweise weniger als 5 Vol.-%, der Polymerpartikel über einen mittleren Durchmesser von 125 µm oder weniger verfügen.

2. Verfahren nach Anspruch 1, wobei 0,2 bis 30 Gew.-ppm, vorzugsweise 0,4 bis 10 Gew.-ppm, des antistatischen Mittels dem Polymerisationsgemisch zugegeben werden.

3. Verfahren nach Anspruch 2, wobei die Alkylketten des Dialkyldimethylammoniumchlorids beide zwischen C8 und C22 sind.

4. Verfahren nach Anspruch 3, wobei es sich bei dem Dialkyldimethylammoniumchlorid um Dicocoyldimethylammoniumchlorid handelt.

5. Verfahren nach einem der vorstehenden Ansprüche, wobei der Chromkatalysatorträger ein Porenvolumen von mindestens 1,6 cm³/g aufweist.

6. Verfahren nach einem der vorstehenden Ansprüche, wobei der Chromkatalysatorträger eine spezifische Oberfläche von nicht mehr als 800 m²/g und bevorzugt nicht mehr als 650 m²/g aufweist.

7. Verfahren nach einem der vorstehenden Ansprüche, wobei der Chromkatalysatorträger in Form eines Pulvers vorliegt, das Partikel mit einem Durchmesser von 20 bis 200 µm umfasst.

8. Verwendung von 0,1 bis 100 Gew.-ppm eines antistatischen Mittels, bei dem es sich um ein Dialkyldimethylammoniumchlorid handelt, in einem Suspensionspolymerisationsverfahren, das bei einer Temperatur von 90 °C bis 107 °C und unter Verwendung eines Chromkatalysators mit einer Aktivität von mindestens 1.000 g Polymer / g Katalysator/Stunde auf einem Träger mit einem Porenvolumen von mindestens 1,3 cm³/g und einer Produktivität unter typischem Reaktorbetrieb zwischen 3.000 und 15.000 g Polymer pro g Katalysator durchgeführt wird, um die Partikelgrößenverteilung des bei dem Verfahren hergestellten Polymers derart zu steuern, dass weniger als 8 Vol.-%, vorzugsweise weniger als 5 Vol.-%, der Polymerpartikel einen mittleren Durchmesser von 125 µm oder weniger aufweisen.

9. Verfahren oder Verwendung nach einem der vorstehenden Ansprüche, wobei die Menge an Partikeln mit einem mittleren Durchmesser von 125 µm oder weniger im Vergleich zu dem Wert bei einem identischen Verfahren, bei dem kein antistatisches Mittel zugegeben wurde, um mindestens 30 Vol.-%, vorzugsweise mindestens 50 Vol.-%, reduziert wird.

## Revendications

1. Procédé de production d'un polymère d'oléfine dans un procédé de polymérisation en suspension réalisé à une température de 90 °C à 107 °C et utilisant un catalyseur au chrome ayant une activité d'au moins 1 000 g de polymère/g de catalyseur/heure sur un support présentant un volume de pore d'au moins 1,3 cm³/g et une productivité en fonctionnement type du réacteur de 3 000 à 15 000 g de polymère par g de catalyseur, comprenant l'ajout au mélange de polymérisation d'un agent antistatique qui est un chlorure de dialkyldiméthylamirionium, en une quantité de 0,1 à 100 ppm en poids sur la base du diluant dans la suspension, dans lequel le polymère résultant présente une répartition granulométrique telle que moins de 8 % en volume, de préférence moins de 5 % en volume des particules polymères ont un diamètre moyen de 125 µm ou moins.

2. Procédé selon la revendication 1, dans lequel de 0,2 à 30 ppm en poids, de préférence de 0,4 à 10 ppm en poids de l'agent antistatique sont ajoutés au mélange de polymérisation.

3. Procédé selon la revendication 2, dans lequel les chaînes alkyle du chlorure de dialkyldiméthylammonium sont toutes les deux entre C8 à C22.

4. Procédé selon la revendication 3, dans lequel le chlorure de dialkyldiméthylammonium est un chlorure de dicocoyldiméthylammonium.

5. Procédé selon une quelconque revendication précédente, dans lequel le support du catalyseur au chrome présente un volume de pore d'au moins 1,6 cm³/g.

6. Procédé selon une quelconque revendication précédente, dans lequel le support du catalyseur au chrome présente une surface spécifique qui n'est pas supérieure à 800 m²/g, et de préférence qui n'est pas supérieure à 650 m²/g.

7. Procédé selon une quelconque revendication précédente, dans lequel le support du catalyseur au chrome est sous la forme d'une poudre comprenant des particules de 20 à 200 µm de diamètre.

8. Utilisation de 0,1 à 100 ppm en poids d'un agent antistatique, qui est un chlorure de dialkyldiméthylammonium, dans un procédé de polymérisation en suspension réalisé à une température de 90 °C à 107 °C et utilisant un catalyseur au chrome ayant une activité d'au moins 1 000 g de polymère/g de catalyseur/heure sur un support présentant un volume de pore d'au moins 1,3 cm³/g et une productivité en fonctionnement type du réacteur de 3 000 à 15 000 g de polymère par g de catalyseur, pour contrôler la répartition granulométrique d'un polymère produit dans ledit procédé de façon que moins de 8 % en volume, de préférence moins de 5 % en volume des particules polymères aient un diamètre moyen de 125 µm ou moins.

9. Procédé ou utilisation selon une quelconque revendication précédente, dans lequel la quantité de particules ayant un diamètre moyen de 125 µm ou moins est réduite d'au moins 30 % en volume, de préférence d'au moins 50 % en volume, par rapport au niveau dans un procédé identique dans lequel aucun agent antistatique n'a été ajouté.
